# Europäisches Patentamt

(19) **European Patent Office**

**Office européen des brevets**

(11) Veröffentlichungsnummer: **0 149 085**
**B1**

(12) **EUROPÄISCHE PATENTSCHRIFT**

(45) Veröffentlichungstag der Patentschrift:
**15.11.89**

(51) Int. Cl.⁴: **B 60 R 22/36,** B 60 R 22/34

(21) Anmeldenummer: **84114545.1**

(22) Anmeldetag: **30.11.84**

(54) **Gurtaufrollschnellsperrautomat.**

(30) Priorität: **11.01.84 DE 3400651**

(43) Veröffentlichungstag der Anmeldung:
**24.07.85 Patentblatt 85/30**

(45) Bekanntmachung des Hinweises auf die Patenterteilung:
**15.11.89 Patentblatt 89/46**

(84) Benannte Vertragsstaaten:
**DE FR GB**

(56) Entgegenhaltungen:
**EP-A-0 092 407**
**DE-A-2 824 864**
**DE-A-3 022 756**
**DE-A-3 147 213**
**DE-A-3 212 992**
**FR-A-2 346 028**
**GB-A-2 057 853**

(73) Patentinhaber: **Allied Engineering S.A., 15,**
**Boulevard Roosevelt, L-2450 Luxembourg (LU)**

(72) Erfinder: **Adomeit, Heinz- Dieter, Dr.- Ing.,**
**Grolmanstrasse 16, D-1000 Berlin 16 (DE)**

(74) Vertreter: **Weber, Dieter, Dr., Dr. Dieter Weber**
**und Dipl.- Phys. Klaus Seiffert Patentanwälte**
**Gustav- Freytag- Strasse 25 Postfach 6145, D-6200**
**Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft einen Gurtaufrollschnellsperrautomat mit einem Hauptgehäuse, einer Wickelachse mit zugeordneter Wickelfeder und aufgewickeltem Gurtband sowie mit einem Blockiermechanismus, bestehend aus einem Massenkraftsensor, einer mittels eines in einer Haltebohrung im Gehäuse gelagerten Haltezapfens beweglich angeordneten Blockierklinke, einem Blockierzahnrad und einem den Massenkraftsensor tragenden und konzentrisch zur Wickelachse am Gehäuse gelagerten Steuerteil mit einem gegenüber der Wickelachse frei drehbaren Einsteuerelement mit Innenverzahnung zum Einsteuern der Blockierklinke über eine Steuerkurve in das Blockierzahnrad, mit einem das Einsteuerelement lagernden, mit der Wickelachse verbundenen Steuerzahnrad mit Außenverzahnung und einer frei drehbar gelagerten Steuerklinke, die am Steuerzahnrad gelagert ist und einen langen sowie einen kurzen Hebel aufweist, und mit einer über Vorsprünge mit den Enden der Steuerklinke in Eingriff bringbaren Drehträgheitsmasse zum Betätigen der Blockierklinke bei übermäßiger Gurtbandbeschleunigung.

Ein Sperrautomat der vorstehend genannten Art ist bereits aus der DE-A-3 212 992 bekannt. Das dort Arretierantriebsscheibe genannte Einsteuerelement befindet sich auf der der Gurtwickel bezüglich des Blockierzahnrades abgewandten Seite und wird über Schleifreibung mittels eines verhältnismäßig groben Innenringes auf einem Lagerabsatz des Steuerzahnrades gelagert, welches bezüglich des Einsteuerelementes auf der dem Blockierzahnrad gegenüberliegenden Seite angeordnet ist. Schließlich ist auf der bezüglich des Steuerzahnrades dem Einsteuerelement gegenüberliegenden Seite eine als Schwungscheibe ausgebildete Drehträgheitsmasse angeordnet. Weil sich die Steuerklinke zwischen Steuerzahnrad und Einsteuerelement befindet, die Schwungscheibe sich aber auf der dieser Steuerklinke gegenüberliegenden Seite bezüglich des Steuerzahnrades befindet, müssen Zapfen an der Schwungscheibe konzentrisch und parallel zur Wickelachse in Richtung auf das Einsteuerelement durch das Steuerzahnrad hindurchragend vorgesehen sein.

Abgesehen von dem konstruktiven Aufwand des bekannten Automaten wird beim An- und Ablegen des Gurtes durch den Benutzer laufend eine Hysterese erzeugt und für den Benutzer damit ein nachteiliges Beschwernis geschaffen, weil eine verhältnismäßig große Reibung zwischen dem Lagerabsatz auf dem Steuerzahnrad und dem Innenring des Einsteuerelementes besteht.

Ferner hat sich herausgestellt, daß die Anbringung der Blockierklinke am Automatengehäuse noch nicht optimal vorgesehen ist, weil im Unfallmoment nicht unerhebliche Kräfte auf das Lager der Wickelachse im Gehäuse übertragen werden; eine Tatsache, die im gesamten Stand der Technik bislang als selbstverständlich hingenommen wurde.

Aufgabe der Erfindung ist die weitere Verbesserung eines Gurtaufrollschnellsperrautomaten der eingangs näher bezeichneten Art dahingehend, daß der Aufbau der Einzelteile und des gesamten Automaten ohne Beeinträchtigung seiner Funktion weiter vereinfacht wird, das Komfortverhalten des Gerätes verbessert und das Lager der Wickelachse im Gehäuse entlastet wird.

Diese Aufgabe wird erfindungsgemäß dadurch gelöst, daß das Steuerzahnrad über außermittige Zapfen am Blockierzahnrad befestigt ist und einen zur gegenüberliegenden Seite vorstehenden, hohl ausgebildeten zentralen Zapfen aufweist, in welchem der Mittelstift des becherförmigen Einsteuerelementes drehbar gelagert ist, welches becherartig das Blockierzahnrad, die Blockierklinke und das Steuerzahnrad mit darin gelagerter Drehträgheitsmasse und Steuerklinke umgreift, daß die Haltebohrung im Gehäuse in Flucht zum Gurtein- und -ablaufkanal angebracht ist und daß sich der Bereich der Blockierklinkenzähne im Blockierzustand außerhalb oder am Rand des Gurtein- und -ablaufkanales auf der Seite zum Blockierzahnrad hin befindet. Gegenüber dem bekannten Sperrautomaten der vorstehend beschriebenen Art wird das Einsteuerelement bezüglich Steuerzahnrad und Drehträgheitsmasse seitenvertauscht angeordnet. Hierdurch ergeben sich u.a. zwei besondere Vorteile, nämlich erstens der, daß das Einsteuerelement nur noch über einen Zapfen mit geringem Durchmesser, vorzugsweise 5 mm, in dem hohl ausgebildeten, zentralen Zapfen des Steuerzahnrades drehbar gelagert ist, und der zweite, daß das Einsteuerelement wie ein Gehäuse den gesamten Steuermechanismus verschließend umgreift. Außerdem erübrigt sich das komplizierte Durchgreifen der Zapfen an der Drehträgheitsmasse durch die Scheibe des Steuerzahnrades, weil die Schwungscheibe direkt in dem Ringraum außerhalb des zentralen Zapfens und innerhalb der Außenverzahnung des Steuerzahnrades und damit zwischen letzterem und dem Einsteuerelement angeordnet ist.

Der neue Aufbau fördert den Komfort für den Benutzer erheblich, weil die Reibung des im normalen Betrieb stationären Einsteuerelementes auf der sich drehenden Wickelachse praktisch beseitigt ist. Bei einer nachfolgend beschriebenen und bevorzugten Ausführungsform beträgt der Durchmesser des Mittelstiftes des becherförmigen Einsteuerelementes 8 mm, und Messungen haben eine vernachlässigbar kleine Reibung im zentralen Zapfen des Steuerzahnrades ergeben. Die nachteilige Hysterese beim An- und Ablegen des Gurtes ist in vorteilhafter Weise durch die erfindungsgemäße Maßnahme ausgeschaltet.

Das neu ausgestaltete Einsteuerelement übernimmt verschiedene Funktionen in geschickter Weise und kann daher leicht bei der Fertigung montiert werden. Vorzugsweise ist es aus Kunststoff hergestellt und kann somit feine Einzelheiten tragen, beispielsweise Haken für die Befestigung einer Justierfeder zum Halten des Einsteuerelementes am Gehäuse, Steuerkurve für den an der Blockierklinke befindlichen Steuerzapfen, Halterung für den fahrzeugempfindlichen Sensor usw. Gleichzeitig umgreift das Einsteuerelement topfartig alle Einzelteile für den Steuermechanismus, wie oben schon erläutert.

Die Anordnung der Haltebohrung für die Blockierklinke zum drehbar gelagerten Festhalten derselben an der Gehäusewandung in Flucht und vorzugsweise im Bereich des erwähnten Gurtein- und -ablaufkanales ist besonders vorteilhaft in Verbindung mit dem Eingriffsbereich der Blockierzähne zwischen der Klinke und dem Blockierzahnrad, weil dadurch gewährleistet wird, daß die gesamte im Unfallmoment im Gurtband in Richtung Ablauf wirkende Kraft praktisch auf den Halte- und Lagerzapfen der Blockierklinke und damit in die Haltebohrung und in das Gehäuse geleitet wird. Es hat sich gezeigt, daß durch diese Ausgestaltung der Lagerung, Gestalt und Richtung der Blockierklinke bezüglich des Zahneingriffes mit dem Blockierzahnrad die vom Gurtband ausgeübten Kräfte sich im wesentlichen alle auf den Bereich der Verzahnung konzentrieren, so daß in der Wickelachse relativ zum Gehäuse praktisch keine Reaktionskraft übrig bleibt. Infolge dieser praktisch reaktionsfreien Lagerung der Wickelachse in der Gehäusewandung verbleibt die Wickelachse im wesentlichen in ihrer Längsachse sowohl im Normal- als auch im Verriegelungszustand. Dies bedeutet die Möglichkeit einer leichteren Ausgestaltung des Automatengehäuses, wenigstens im Bereich der Wickelachsenlagerung. Der Fachmann weiß, welche Vorteile sich mit Gewichtseinsparungen ergeben.

Dieses Verhalten der Wickelachse auch im Unfallmoment bei starkem Zug im Gurtband in Abwickelrichtung ergibt sich besonders günstig dann, wenn sich erfindungsgemäß der Bereich der Blockierzähne im Blockierzustand auf der Gurtabzugsseite der Gurtwickel in einem Winkelbereich von etwa 120° liegt, beginnend etwa 10° unterhalb des tangentialen Gurtablaufpunktes und in mathematisch possitivem Sinne gezählt. Bei der Bestimmung der Lage des Eingriffsbereichs oder Kontaktbereiches interessiert im wesentlichen nur die Lage der Blockierklinke, weil das Blockierzahnrad konstanten Durchmesser hat und es nur darauf ankommt, in welche Richtung die Zugkraft des mit hoher Beschleunigung herausgezogenen Gurtes die Blockierklinke in den Blockierzustand zieht. Bei dieser Betrachtung geht man stets von dem tangentialen Gurtablaufpunkt aus, d.h. derjenigen Stelle an der Wickelrolle, wo das Gurtband die Gurtwickel tangential in Zugrichtung verläßt. In Gurtauszugsrichtung gesehen beginnt dieser Winkelbereich etwa 10° hinter dem Gurtablaufpunkt und erstreckt sich - in mathematisch possitivem Sinne gezählt - bis 120°; und vorzugsweise vom Gurtablaufpunkt ausgehend in einem Winkelbereich von 90°. Bei einer speziellen Ausführungsform hat es sich als besonders günstig erwiesen, wenn dieser Winkelbereich 10° oberhalb des tangentialen Gurtablaufpunktes beginnt und sich bis höchstens zu der Stelle erstreckt, wo der Radius parallel zur Richtung der Gurtzugkraft liegt.

Es war früher schon einmal eine Konstruktion vorgeschlagen worden, bei welcher das Blockierzahnrad direkt in die Innenverzahnung eines gehäuseseitig befestigten Ringes bewegt werden konnte. Hier muß aber die gesamte Masse des Blockierzahnrades mit daran befestigter Wickelwelle und auch der Gurtwickel relativ zum Gehäuse bewegt werden. Erfindungsgemäß hingegen wird die Wickelachse ortsfest gehalten, auch wenn sie entlastet wird, d.h. sie muß sich nicht gegenüber dem Gehäuse verschieben. Erfindungsgemäß erfolgt das Entlasten der gehäuseseitigen Lagerung der Wickelachse durch die Blockierklinke als Art Kupplungselement, mit anderen Worten wird erfindungsgemäß der Verriegelungszustand mit Hilfe eines Koppelelementes, der Blockierklinke, zwischen dem Blockierzahnrad und dem Gehäuse geschaffen.

Durch diese Anordnung der Blockierklinke, die sich etwa parallel zu dem erwähnten Gurtein- und -ablaufkanal erstreckt, erhält man eine reine Zugkraft in der Blockierklinke, die einen zuverlässigen stabilen Zustand gewährleistet. Zwar kann man auch eine Druckklinke, die klein und kurz im Verhältnis zu der längeren Zugklinke, die erfindungsgemäß hier beschrieben ist, ausgestalten und um 180° verdreht so anordnen, daß die Zähne der Zugklinke in die des Blockierzahnrades in Druckrichtung wirken. Eine solche Ausgestaltung ist aber nicht besonders stabil und neigt unter manchen Bedingungen zum Ausknicken in zwei Raumrichtungen, weshalb es bevorzugt ist, die erfindungsgemäß beschriebene Zugklinke zu verwenden.

Bei vorteilhafter weiterer Ausgestaltung der Erfindung sind im Ringraum des Steuerzahnrades konzentrisch zum zentralen Zapfen elastische, die Drehträgheitsmasse umgreifende Haken und ein Haltezapfen zur Befestigung einer Justierfeder zum Halten der Drehträgheitsmasse angebracht. Das Steuerzahnrad ist vorzugsweise aus Kunststoff hergestellt und kann daher ebenfalls mit vielen Einzelheiten gefertigt werden. Auf dem zentralen Zapfen lagert außen die Drehträgheitsmasse mit Hilfe ihrer Innenbohrung, während die axiale Sicherung durch die erwähnten konzentrisch angeordneten Haken gewährleistet wird. Damit die gurtbandsensitive Justierfeder, die an ihrem einen Ende über einen Haken an der Schwungscheibe befestigt ist, diese im Normalbetrieb mit dem Steuerzahnrad mitdrehend hält, ist in diesem Ringraum auch der erwähnte Haltezapfen angeordnet.

Zweckmäßig ist es erfindungsgemäß auch, wenn an der offenen Seite des aus Kunststoff bestehenden becherförmigen Einsteuerelementes ein Randflansch angeformt ist, der mittels Schnapphaken an einer Abdeckplatte aus Kunststoff oder dergleichen gehalten und von dieser verschlossen ist.

Gegenüber dem eingangs beschriebenen Gurtaufrollschnellsperrautomaten ist auch am Gehäuse eine Lagevertauschung eines Deckels aus Kunststoff und der Stahlwandung des Gehäuses vorgesehen. Erfindungsgemäß wird nämlich eine aus Kunststoff gefertigte Abdeckplatte außen auf derjenigen Seite der Seitenwand des Stahlgehäuses aufgelegt, an welcher auch der Blockiermechanismus angeordnet ist. Auf diese Weise kann die Abdeckplatte die eine Verschlußwand und das becherförmige Einsteuerelement den anderen verschließenden Becher oder Topf bilden, in welchem der gesamte Steuermechanismus angeordnet ist. Weil die Abdeckplatte keine Haltefunktion hat und nicht Kräfte übernehmen muß, kann sie aus Kunststoff geformt und mit Einzelteilen versehen sein, wie z. B. die Schnapphaken, durch welche eine leichte Montage und dennoch sichere Halterung des Gehäuses gesichert ist, so daß Teile des Gehäuses, nämlich das becherförmige Einsteuerelement, zugleich Steuerfunktionen übernehmen können.

Die vorliegende Erfindung wird in der folgenden Beschreibung eines bevorzugten Ausführungsbeispiels in Verbindung mit den Zeichnungen beschrieben. Es zeigen:

Figuren 1a und 1b als Explosionsdarstellung die einzelnen wichtigsten Bauteile in perspektivischer Darstellung,

Figur 2 eine Seitenansicht auf das Blockierzahnrad mit Blockierklinke unter Weglassung von Steuerzahnrad und Einsteuerelement und teilweise abgebrochenen Seitenwandungen des Gehäuses und

Figur 3 eine Draufsicht auf eine weiter ausgestaltete Schwungscheibe mit Steuerklinke.

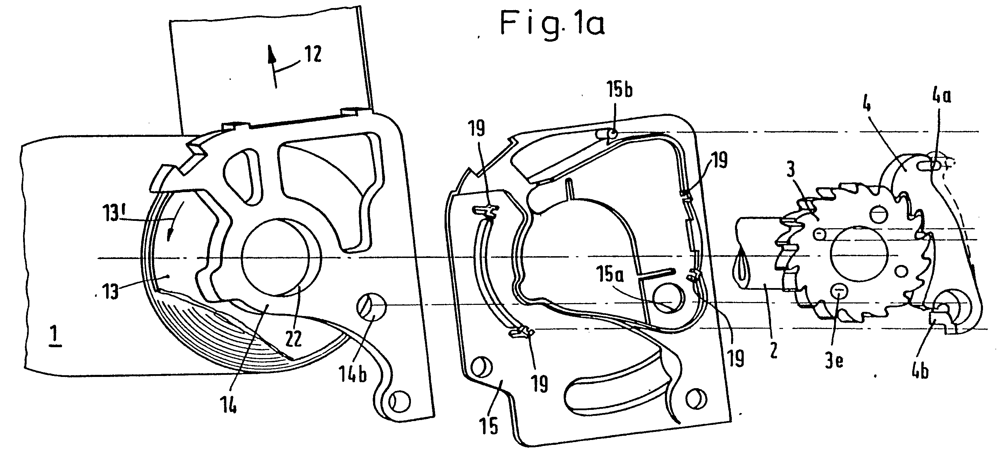

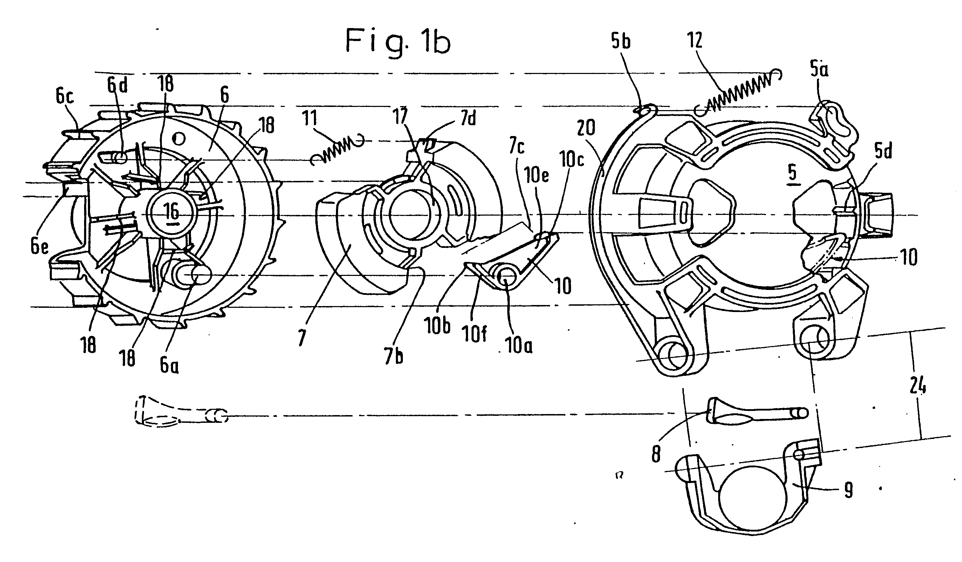

Um eine Gurtwickelachse 2 wird auf einer Gurtbandspule 13 das Gurtband 1 aufgespult, und es ist vor der Stahlgehäuse-Seitenwand 14 eine aus Kunststoff hergestellte Abdeckplatte 15 angeordnet, welche die hinterseitige Abschlußplatte für den gesamten Steuermechanismus darstellt. An dieser Abdeckplatte 15 ist ein Haltestift 15b angebracht, der zum Betrachter der Figur 1 nach vorn hin herausragt und der Anbringung einer Haltefeder 12 dient.

Auf der in dem Gehäuse 14 gelagerten Wickelachse 2 ist kraftschlüssig das Blockierzahnrad 3 angeordnet, welches vier konzentrische Bohrungen 3e zur Aufnahme von Justierzapfen 6e des Steuerzahnrades 6 aufweist, welches sich somit ebenfalls zusammen mit der Wickelachse 2 mitdreht. Wird das Gurtband 1 zur Vergrößerung seiner Länge vom Insassen herausgezogen bzw. abgespult, dann bewegt es sich gemäß Pfeil 12, so daß sich die Wickelachse 2 in Richtung des gebogenen Pfeiles 13' dreht, eine Drehrichtung, die sich dann auch bei dem Blockierzahnrad 3 und dem Steuerzahnrad 6 wiederfindet. In der Haltebohrung 14b ist der Lager- und Haltezapfen 4b der Blockierklinke 4 drehbar gelagert. Wird die Blockierklinke 4 in die Verzahnung des Blockierzahnrades 3 hineingedreht, in der Darstellung also bei Drehung um den Lager- und Haltezapfen 4b im Gegenuhrzeigersinn, dann wird die entsprechende Gurtzugkraft des Gurtbandes 1 über die Wickelachse 2, das Blockierzahnrad 3, die Blockierklinke 4 und über deren Lager- und Haltezapfen 4b in das mit dem Fahrzeugrahmen verschraubte Gehäuse 14 übertragen.

Im Steuerzahnrad 6 ist auf dem zentralen Zapfen 16 die Drehträgheitsmasse bzw. Schwungscheibe 7 mit ihrer Bohrung 17 konzentrisch gelagert. Die axiale Sicherung dieser Schwungscheibe 7 erfolgt mittels federnder Haken 18. Die Grundposition der Schwungscheibe 7 ergibt sich aufgrund der in ihrer unteren Ausnehmung gelagerten Steuerklinke 10, die mit ihrer Bohrung 10a auf dem Zapfen 6a des Steuerzahnrades 6 gelagert ist. Durch eine von der gurtbandsensitiven Justierfeder 11 zwischen Zahnzapfen 6d des Steuerzahnrades 6 und dem Haken 7d der Schwungscheibe 7 aufgebrachte Rückzugskraft stellt sich eine definierte Ruhelage der Schwungscheibe 7 dadurch ein, daß der Hebel 10 mit seinem hinteren Ende (kurzer Hebel) an der Aussparung 7b der Schwungscheibe 7 und sein vorderes Ende an der Nase 7c der Schwungscheibe 7 anliegt.

In der Bohrung des Zapfens 16 des Steuerzahnrades 6 sitzt mit einem konzentrischen, nicht dargestellten, zentralen oder Mittelzapfen das Einsteuerelement 5. Es überdeckt wie ein Becher oder Topf das Steuerzahnrad 6 mit allen darin befestigten Einzelteilen sowie das darunterliegende Blockierzahnrad 3 der Wickelachse 2 und die Blockierklinke 4. Der Steuerzapfen 4a der Blockierklinke 4 ragt dabei in die Steuerkurve 5a des Einsteuerelementes 5. An dem Einsteuerelement 5 ist nach unten hängend ein Kugelsensor 9 mit einer Sternerklinke 8 befestigt. Dieser Sensor ist um die erkennbare Befestigungsachse 24, die sich durch die Mittelpunkte der sichtbaren Befestigungsöffnung des Einsteuerelementes 5 erstreckt, je nach Einbaulage des ganzen Automaten in einem weiten Winkelbereich einstellbar.

Die Steuerklinke 10 wird durch Gurtbandbeschleunigung aufgrund der Massenträgheit der Schwungscheibe 7 ausdrehen und in die Innenverzahnung 5d des Einsteuerelementes 5 eingreifen. Auf diese Weise wird das sonst gegenüber der drehenden Gurtachse 2 feststehende Einsteuerelement 5, das mit der Feder 12 gegen den Gehäusezapfen 15b eingespannt ist, mitgenommen und drückt dabei mit Hilfe der Steuerkurve 5a über den Steuerzapfen 4a die Blockierklinke 4 zwangssynchronisiert in die Verzahnung des Blockierzahnrades 3 ein.

Ähnlich erfolgt der Einsteuervorgang des Einsteuerelementes 5, wenn aufgrund von überhöhten Fahrzeugbeschleunigungen die Klinke 8 des Sensors 9 durch eine Kugelbewegung angehoben wird und dadurch in die Verzahnung 6c des Steuerzahnrades 6 in Eingriff kommt. Damit nimmt ebenfalls das auf der Achse 2 befestigte Steuerzahnrad 6 über die Sensorklinke 8 das mit dieser direkt verbundene Einsteuerelement 5 mit der Steuerkurve 5a so mit, daß über den Steuerzapfen 4a die Blockierklinke 4 zwangssynchronisiert einrastet.

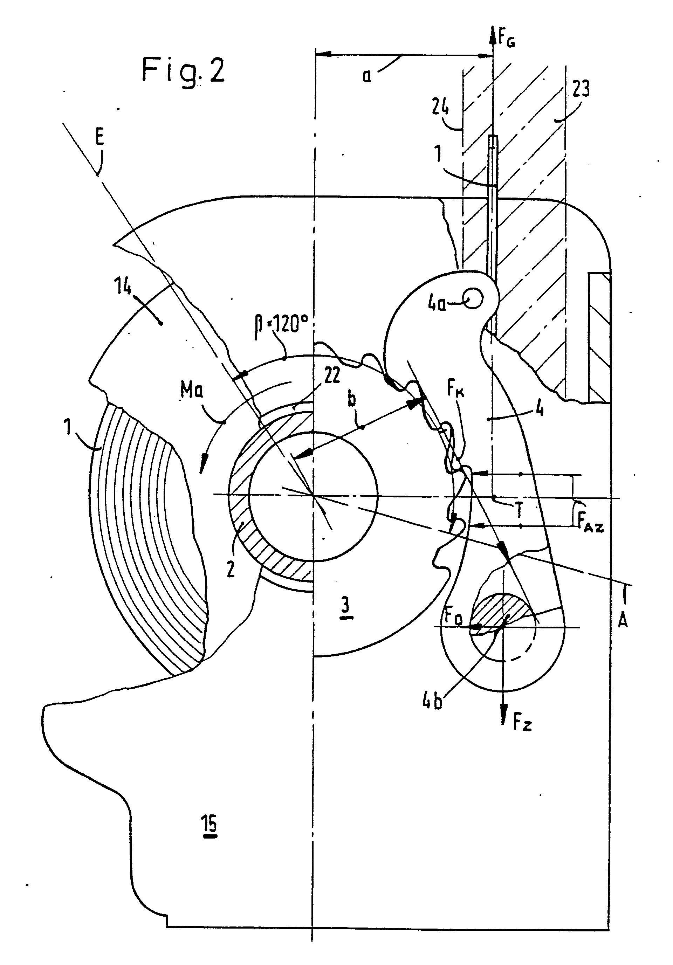

In Figur 2 ist eine Draufsicht auf die Abdeckplatte 15 mit dahinter in dem abgeschnittenen Bereich dargestellten Stahlgehäuse-Seitenwand 14 und dahinter der Gurtbandwickel 1 gezeigt. Auf der Wickelachse 2 sitzt das Blockierzahnrad 3, in welches die Blockierklinke 4 eingreift, die im Blockierzustand auf Zug beansprucht wird, da der Steuerzapfen 4a von dem Lager- und Haltezapfen 4b in verhältnismäßig großem Abstand so angeordnet ist, daß die Verbindungslinie etwa parallel zum Gurtein- und -ablaufkanal 23 liegt. Die Wickelachse 2 ist über das Achslager 22 im Stahlgehäuse 14 gelagert.

In Figur 2 ist die Gurtkraft $F_G$ in der Längsachse des auslaufenden Gurtes 1 dargestellt. Sie wirkt im Falle der hier dargestellten Verriegelung über den Hebelarm a und erzeugt dabei in der Gurtwickelachse 2 ein Moment $M_a$. Diesem Moment $M_a$ wirkt die Klinkenkraft $F_K$ über Hebelarm b entgegen. Um die Klinkenkraft $F_K$ aufzubauen, sind im Haltezapfen 4b die Kraftkomponenten $F_Z$ und $F_Q$ wirksam. Befindet sich nun, wie in Figur 2 erkennbar, der Bereich des Zahneingriffs am linken Rand 24 des Bereiches 23 des Gurtein- und -auslaufs, dann bleibt in der Achse 2 ein in Richtung Moment $M_a$ gerichtetes, geringes Restmoment, welches dazu führt, daß sich weitere Zähne des Zahnrades 3, die sich unterhalb der Verriegelungsstelle befinden, an dem Schaft der Klinke 4 mit den Stützkräften $F_{AZ}$ abstützen. Dies führt zu einer Abnahme der ohnehin nur kleinen Reaktionskraftkomponente $F_Q$ im Haltezapfen 4b.

Daraus ergibt sich folgendes gewünschtes und oben schon angesprochenes Resultat:

Im blockierten Zustand ist somit das Lager 22 der Wickelachse 2 praktisch ohne Reaktionskraft. Dies hat große Bedeutung für die Auslegung des Stahlgehäuses 14. Es muß nämlich im Bereich der Achslagerung bei einer derartigen geometrischen Auslegung im Stahlgehäuse 14 eine nur geringe Steifigkeit vorhanden sein.

Lediglich im Bereich des Lager- und Haltezapfens 4b ist das Gehäuse ausreichend fest zu dimensionieren. Es ist einleuchtend, daß auf diese Weise das Gehäuse 14 ein großes Potential von Gewichtseinsparungen bietet.

In Figur 2 ist ferner der Gurtablaufpunkt T gezeigt, von dem aus das Gurtband 1 in Richtung der Kraft $F_G$ von der Gurtwickel abgewickelt wird. Geht man auf dieser Gurtabzugseite um etwa 10° nach unten zurück, so erhält man die Anfangslinie A, die gestrichelt dargestellt ist. Von dieser aus erstreckt sich der Winkelbereich $\Delta\beta$ für den oben erläuterten Kontakt- bzw. Eingriffsbereich zwischen dem Blockierzahnrad 3 und der Blockierklinke 4 bis zu der ebenfalls gestrichelt gezeichneten Endlinie E. Ausgehend von der Anfangslinie A kann sich bei einer anderen Ausführungsform der Winkelbereich $\Delta\beta$ für den Eingriffsbereich auch von etwa 20 bis 100° erstrecken, wobei auch schon vorgesehen wurde, die Zähne der Blockierklinke 4 in einem Winkel von etwa 45° in dem rechten oberen Sektor des Kreises der Figur 2 vorzusehen.

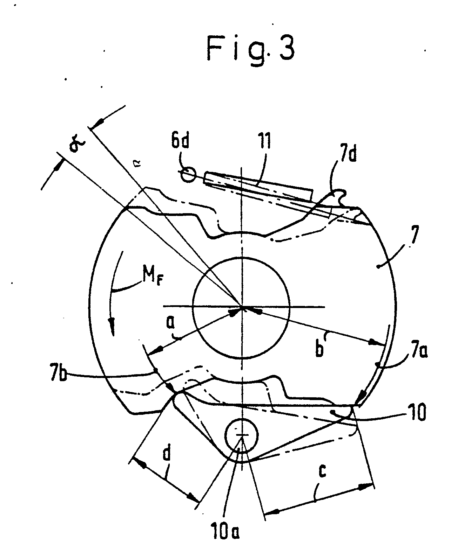

Figur 3 zeigt eine weitere Ausgestaltung der Schwungscheibe 7 in einer Draufsicht in Figur 1 von rechts vorn, wobei das Steuerzahnrad 6 weggelassen ist, lediglich der Zapfen 6d für die gurtbandsensitive Justierfeder 11, am Haken 7d befestigt, angedeutet ist.

Die Steuerklinke 10 befindet sich in der Darstellung mit durchgezogenen Linie im ruhenden Zustand, wenn die Schwungscheibe durch das Federkraftmoment $M_F$ nach links gedreht ist; und im ausgeklinkten Zustand, wenn die Scheibe 7 entgegen dem Moment $M_F$ nach rechts verdreht ist. Erkennbar ist im Ruhezustand der kurze Hebel d der Steuerklinke 10 gegenüber dem längeren Hebel c. Der federvorgespannte Ruhezustand für die Schwungscheibe 7 und die Steuerklinke 10 ergibt sich aufgrund der Abstützung der Scheibe 7 mit dem Hebel a an der Kontaktstelle, die mit dem gebogenen Pfeil 7a gezeigt ist. Das an der gegenüberliegenden Berührungsstelle 7b (Pfeil) erzeugte Drehmoment um den in der Bohrung 10a liegenden Lagerzapfen 6a ergibt sich aufgrund der Abstützung der Schwungscheibe 7 mit dem Hebel a an der Kontaktstelle 7b. Das an der Berührungs- bzw. Kontaktstelle 7b erzeugte Drehmoment um den Zapfen 6a (Bohrung 10a) der Steuerklinke 10 führt zu einer definierten Lage derselben an der Kontaktfläche 7c der Schwungscheibe 7. Mit anderen Worten justieren sich Schwungscheibe 7 und Steuerklinke 10 in einer kraftschlüssigen Ruhelage selbsttätig ein.

Aufgrund des Hebelverhältnisses c zu d der Klinke 10 ist stets ein Freigang der Steuerklinke 10 an der Kontaktstelle 7b vorhanden, sobald die Schwungscheibe 7 nach rechts drehend die Steuerklinke 10 zum Eingriff nach außen drückt.

## Patentansprüche

1. Gurtaufrollschnellsperrautomat mit einem Hauptgehäuse (14), einer Wickelachse (2) mit zugeordneter Wickelfeder und aufgewickeltem Gurtband (1) sowie mit einem Blockiermechanismus, bestehend aus einem Massenkraftsensor (8, 9), einer mittels eines in einer Haltebohrung (14b) im Gehäuse (14) gelagerten Haltezapfens (4b) beweglich angeordneten Blockierklinke (4), einem Blockierzahnrad (3) und einem den Massenkraftsensor (8, 9) tragenden und konzentrisch zur Wickelachse (2) am Gehäuse gelagerten Steuerteil (5, 6) mit einem gegenüber der Wickelachse (2) frei drehbaren Einsteuerelement (5) mit Innenverzahnung (5d) zum Einsteuern der Blockierklinke (4) über eine Steuerkurve (5a) in das Blockierzahnrad (3), mit einem das Einsteuerelement (5) lagernden, mit der Wickelachse (2) verbundenen Steuerzahnrad (6) mit Außenverzahnung (6c) und einer frei drehbar gelagerten Steuerklinke (10), die am Steuerzahnrad (6) gelagert (10a) ist und einen langen (10e), und einen kurzen Hebel (10f) aufweist, und mit einer über Vorsprünge (7b, 7c) mit den Enden (10b, 10c) der Steuerklinke (10) in Eingriff bringbaren Drehträgheitsmasse (7) zum Betätigen der Blockierklinke (4) bei übermäßiger Gurtbandbeschleunigung, dadurch gekennzeichnet, daß das Steuerzahnrad (6) über außermittige Zapfen (6e) am Blockierzahnrad (3) befestigt ist und einen zur gegenüberliegenden Seite vorstehenden, hohl ausgebildeten zentralen Zapfen (16) aufweist, in welchem der Mittelstift des becherförmigen Einsteuerelementes (5) drehbar gelagert ist, welches becherartig das Blockierzahnrad (3), die Blockierklinke (4) und das Steuerzahnrad (6) mit darin gelagerter Drehträgheitsmasse (7) und Steuerklinke, daß die Haltebohrung (14b) im Gehäuse (14) in Flucht zum Gurtein- und -ablaufkanal (23) angebracht ist und daß sich der Bereich der Blockierklinkenzähne im Blockierzustand außerhalb oder am Rand (24) des Gurtein- und -ablaufkanales (23) auf der Seite zum Blockierzahnrad (3) hin befindet.

2. Sperrautomat nach Anspruch 1, dadurch gekennzeichnet, daß der Bereich der Blockierklinkenzähne im Blockierzustand auf der Gurtabzugsseite der Gurtwickel (1) in einem Winkelbereich (Δβ) von etwa 120° liegt, beginnend etwa 10° unterhalb des tangentialen Gurtablaufpunktes (T) und in mathematisch positivem Sinne gezählt.

3. Sperrautomat nach Anspruch 1 oder 2, dadurch gekennzeichnet, daß im Ringraum des Steuerzahnrades (6) konzentrisch zum zentralen Zapfen (16) elastische, die Drehträgheitsmasse (7) umgreifende Haken (18) und ein Haltezapfen (6d) zur Befestigung einer Justierfeder (11) zum Halten der Drehträgheitsmasse (7) angebracht sind.

4. Sperrautomat nach Anspruch 1 oder 2, dadurch gekennzeichnet, daß an der offenen Seite des aus Kunststoff bestehenden becherförmigen Einsteuerelementes (5) ein Randflansch (20) angeformt ist, der mittels Schnapphaken (19) an einer Abdeckplatte (15) aus Kunststoff oder dergleichen gehalten und von dieser verschlossen ist.

**Claims**

1. An automatic rapid-lock inertia safety belt mechanism comprising a main housing (14), a roll-up spindle (2) with an associated roll-up spring and a rolled-up safety belt (1) and also a locking mechanism, consisting of an inertia force sensor (8, 9), a locking catch (4) disposed for movement by means of a retaining stud (4b) mounted in a retaining bore (14b) in the housing (14), a locking gearwheel (3) and, carrying the inertia force sensor (8, 9) and mounted on the housing concentrically of the roll-up spindle (2) with a control element (5) freely rotatable in respect of the roll-up spindle (2) and with internally cut teeth (5d) for controlling the locking catch (4) via a control cam (5a) to engage the locking gearwheel (3), with a control gearwheel (6) having externally cut teeth (6c), connected to the roll-up spindle (2) and mounting the control element (5), and with a freely rotatably mounted control catch (10) which is mounted (10a) on the control gearwheel (6) and which has a long lever (10e) and a short lever (10f), and with, adapted to be brought into engagement with the ends (10b, 10c) of the control catch (10) via projections (7b, 7c), a rotatable mass of inertia (7) for actuating the locking catch (4) when there is an excessive acceleration of the safety belt, characterised in that the control gearwheel (6) is fixed on the locking gearwheel (3) via eccentric studs (6e) and comprises a hollow central stud (16) projecting towards the opposite side and in which the central pin of the cup-shaped control element (5) is rotatably mounted, engaging like a cup around the locking gearwheel (3), the locking catch (4) and the control gearwheel (6) with the rotary inertia mass (7) and control catch (10) mounted therein and in that the retaining bore (14b) in the housing (14) is brought into alignment with the belt intake and outlet passage (23) and in that in the locked condition, the region of the locking catch teeth is outside of or at the end (24) of the belt intake and outlet passage (23) on the side towards the locking gearwheel (3).

2. Automatic locking device according to Claim 1, characterised in that in the locked condition, the region of the locking catch teeth lies on the belt pull-off side of the safety belt (1), within an angular range (Δβ) of about 120°, starting about 10° below the tangential belt run-out point (T) and reckoned in a mathematically positive sense.

3. Automatic locking device according to Claim 1 or 2, characterized in that in the annular space of the control gearwheel (6) concentrically of the central stud (16) there are flexible hooks (18) engaging around the rotary mass of inertia (7) and a retaining stud (6d) for attachment of an adjusting spring (11) for retaining the rotary mass of inertia (7).

4. Automatic locking device according to Claim 1 or 2, characterised in that on the open side of the cup-shaped control element (5) which consists of a synthetic plastics material, there is an integrally moulded marginal flange (20) which is supported by means of snap hooks (19) on a cover plate (15) of synthetic plastics material or the like, by which it is occluded.

**Revendications**

1. Enrouleur de ceinture à verrouillage rapide comportant un boîtier principal (14), un arbre d'enroulement (2) avec un ressort d'enroulement correspondant et une ceinture (1) enroulée sur ce dernier et un mécanisme de blocage comportant un détecteur de force d'inertie (8, 9), un cliquet de blocage (4) qui est disposé mobile au moyen d'une broche de maintien (4b) montée dans un alésage de maintien (14b) prévu dans le boîtier (14), une roue dentée de blocage (3) et un élément de commande (5, 6) qui porte le détecteur de force d'inertie (8, 9) et qui est monté concentriquement par rapport à l'arbre d'enroulement (2) sur le boîtier, un élément de commande d'engagement (5) qui est libre en rotation par rapport à l'arbre d'enroulement (2) et qui comporte des dents internes (5d), prévues pour coopérer avec le cliquet de blocage (4) au moyen d'une came de commande (5a) à l'intérieur de la roue dentée de blocage (3), une roue dentée de commande (6) qui est montée sur l'élément de commande d'engagement (5) et qui est reliée à l'arbre d'enroulement (2) et qui comporte des dents externes (6c), et un cliquet de commande monté en rotation libre (10) qui est monté (10a) sur la roue dentée de commande (6) et qui comporte un grand levier (10e) et un levier court (10f) et une masse d'inertie rotative (7) qui peut être amenée en coopération avec les extrémités (10d, 10c) du cliquet de commande (10) au moyen de saillies (7b, 7c) pour commander le cliquet de blocage (4) lors d'une accélération excessive de la ceinture, caractérisé en ce que la roue dentée de commande (6) est fixée sur la roue dentée de blocage (3) au moyen de broches excentriques (6e) et comporte une partie formant palier central creux (16) qui fait saillie sur le côté disposé à l'opposé et dans lequel la broche centrale de l'élément de commande de coopération en forme de coupelle (5) est monté tournant, l'élément en forme de coupelle venant coopérer avec la roue dentée de blocage (3), le cliquet de blocage (4) et la roue dentée de commande (6) sur laquelle est montée la masse d'inertie tournante (7) et le cliquet de commande (10), en ce que l'alésage de maintien (14b) est disposé dans le boîtier (14) en alignement par rapport aux passages d'entrée et de sortie (23) de la ceinture et en ce que la région des dents du cliquet de blocage, lors du blocage, se trouve à l'extérieur ou sur le bord (24) des passages d'entrée et de sortie (23) du côté situé vers la roue dentée de blocage (3).

2. Dispositif de verrouillage rapide selon la revendication 1 caractérisé en ce que la zone des dents du cliquet de blocage, en condition de blocage, se trouve disposée du côté de sortie de la ceinture de l'enroulement de ceinture (1) avec un angle ($\Delta\beta$) qui est d'environ 120° et commence à environ 10° en dessous du point de sortie tangentiel (T) de la ceinture et est compté dans le sens mathématique positif.

3. Dispositif de verrouillage rapide selon la revendication 1 ou la revendication 2 caractérisé en ce que des crochets élastiques (18) sont montés dans l'espace annulaire de la roue dentée de commande (6) concentriquement par rapport à la partie de palier central (16) lesquels crochets coopèrent avec la partie extérieure de la masse d'inertie tournante (7) et une broche de maintien (6d) est prévue pour fixer un ressort de réglage (11) en vue de maintenir la masse d'inertie tournante (7).

4. Dispositif de verrouillage rapide selon l'une des revendications 1 ou 2 caractérisé en ce qu'il est formé à l'extrémité ouverte de l'élément de commande en forme de coupelle (5) qui est réalisé en matériau plastique une bride formant bordure (20) qui est maintenue au moyen de crochets à encliquetage (19) à une plaque formant couvercle (15) en matériau plastique ou analogue et se trouve fermée par cette dernière.

# Fig.1a

EP 0 149 085 B1

# Fig. 1b

Fig. 2

# Fig. 3